## Europäisches Patentamt
## European Patent Office
## Office européen des brevets

(19)

(11) Veröffentlichungsnummer: **0 130 946**
**B1**

(12)

# EUROPÄISCHE PATENTSCHRIFT

(45) Veröffentlichungstag der Patentschrift:
27.04.88

(21) Anmeldenummer: **84810316.4**

(22) Anmeldetag: **27.06.84**

(51) Int. Cl.⁴: **A 23 J 1/14,** C 08 B 37/00,
A 23 J 1/00

(54) **Verfahren zur Herstellung eines galaktomannanreichen Verdickungsmittels.**

(30) Priorität: **01.07.83 CH 3649/83**

(43) Veröffentlichungstag der Anmeldung:
**09.01.85 Patentblatt 85/2**

(45) Bekanntmachung des Hinweises auf die Patenterteilung:
**27.04.88 Patentblatt 88/17**

(84) Benannte Vertragsstaaten:
**CH DE FR IT LI NL**

(56) Entgegenhaltungen:
**US-A-2 767 167**
**US-A-3 712 883**
**US-A-3 869 438**
**US-A-4 011 393**

(73) Patentinhaber: **Meyhall Chemical AG,
Sonnenwiesenstrasse 18, CH- 8280 Kreuzlingen
(CH)**

(72) Erfinder: **Wielinga, Willem Cor, Hinterdorfstrasse
41, CH- 8274 Tägerwilen (CH)**

(74) Vertreter: **Justitz- Wormser, Daisy P., Dipl.-
Chem., PATENTANWALTS- BUREAU ISLER AG
Postfach 6940 Walchestrasse 23, CH- 8023 Zürich
(CH)**

EP 0 130 946 B1

LIBER, STOCKHOLM 1988

## Beschreibung

Gegenstand der vorliegenden Erfindung ist ein Verfahren zur Herstellung eines galaktomannanreichen Verdickungsmittels, welches in wässeriger Lösung eine höhere Viskosität aufweist als das Ausgangsprodukt, das dadurch gekennzeichnet ist, dass man ein Leguminosen-Endospermmehl in eine polysaccharidreiche, proteinarme Fraktion und eine polysaccharidarme, proteinreiche Fraktion aufteilt, indem man das Mehl in einem Lösungsmittel oder Lösungsmittelgemisch suspendiert, dessen Dichte zwischen den Dichten der beiden Fraktionen liegt, die Fraktionen trennt, die polysaccharidreiche Fraktion vom Lösungsmittel bzw. -gemisch befreit und die darin enthaltenen Galaktomannane gegebenenfalls auf bekannte Weise veräthert, verestert oder depolymerisiert.

Zahlreiche Leguminosenmehle fallen als physikalische Gemenge von proteinreichen und proteinarmen Partikeln an. Wesentlich für das erfindungsgemässe Verfahren ist die Auftrennung in proteinarme und proteinreiche Fraktionen.

Eine Aufteilung von Getreide- und anderen proteinhaltigen Mehlen mittels Fluorkohlenstoff-Lösungsmitteln wurde in der US-PS-3 869 438 vorgeschlagen. Dieses Verfahren dient jedoch dazu, das in den Ausgangsmaterialien enthaltene Protein zu gewinnen und es der menschlichen Ernärung zugänglich zu machen.

Überraschenderweise wurde nun gefunden, dass die Aufteilung eines Leguminose-Endospermmehls mit einem Lösungsmittel bestimmter Dichte die Gewinnung von weitgehend proteinfreien, polysaccharidreichen Produkten ermöglicht, die als Verdickungsmittel mit bisher nicht erreichbarer Wirksamkeit eingesetzt werden können.

Beispiele geeigneter Leguminosenmehle sind Johannisbrotkernmehl, Guarkernmehl, Tamarindenkernmehl, Tarakernmehl und dergleichen.

Im folgenden wird das Verfahren am Beispiel des Guarkernmehls näher erläutert, doch lassen sich auch die anderen Mehle auf entsprechende Weise verarbeiten und in die gewünschten proteinreichen und proteinarmen Fraktionen trennen.

Guarkernmehl wird aus dem Endosperm der Guarsaat hergestellt. Die Guarsaat enthält etwa 35 % Endosperm. Das Guar-Endosperm, das durch mechanische Separierung des Endosperms von Schale und Keimling gewonnen wird, ist durch kleine Mengen an Schalenresten und Keimlingsmehl verunreinigt.

Die handelsüblichen Produkte werden durch Vermahlen dieses Endosperms bei unterschiedlichem Mahlgrad mit anschliessender Sichtung hergestellt. Dabei bestimmt die Art der physikalischen und mechanischen Vor- und Nachbehandlung die Qualität und Feinheit der üblicherweise in Mehlform gehandelten Produkte.

Die Morphologie von Guarsaat zeigt, dass der Keimling und die embryonale Wurzel vollständig vom Endosperm umgeben sind. Die Peripherie des Endosperms besteht aus einer aleuronähnlichen, in Wasser praktisch unlöslichen Zellschicht, die etwa 25 % Protein enthält. Diese Zellschicht und die wasserunlöslichen Zellwände, Schalen und Keimlingsrückstände sind der Grund dafür, dass bisher keine vollkommen klar wasserlöslichen Produkte hergestellt werden konnten.

Das Endosperm selbst besteht hauptsächlich aus wasserlöslichen Galaktomannanen, die bei der Keimung der Saat als Nahrungsmittel für die heranwachsende Pflanze dienen.

Das mechanisch abgetrennte Guarendosperm, Guar Splits genannt, wird durch seinen Gum Content (Galaktomannangehalt) charakterisiert. Der Gum Content ist dabei als die Differenz zwischen 100 Gew.-% und der Summe der prozentualen Mengen Wasser, Protein und nicht durch Säure hydrolisierbarer Bestandteile (A.I.R.) definiert. Dieser Gum Content variiert bei den meisten handelsüblichen Guar Splits zwischen 78 und 86 Gew.-%. Der Proteingehalt liegt meistens zwischen 3.8 und 6.0 %, der A.I.R.-Gehalt zwischen 1.7 und 3.6 %. Der Wassergehalt der Splits schwankt zwischen 8.0 und 12.0 %.

Die Guar-Galaktomannane bilden schon in geringen Konzentrationen mit Wasser hochviskose Lösungen. 1 gew.-%ige Lösungen von handelsüblichem Guarkernmehl in Wasser ergeben Viskositäten von ca. 3'000 bis 6'000 mPa.s.

Guarprodukte werden oft einer Feinstvermahlung unterworfen, um den störenden Einfluss der wasserunlöslichen Anteile möglichst auszuschalten. Für die Verwendung in der Textilindustrie zum Beispiel sollten die Partikel kleiner als 50 μm sein, damit sie die Schablonen passieren können und keine Druckfehler hervorrufen.

Die unerwünschten wasserunlöslichen Endosperm-Zellverbände, die bis zu 25 % Protein enthalten können, und die Schalenteilchen der handelsüblichen Guarprodukte lassen sich zum grössten Teil, wenn nicht sogar vollständig, durch Separierung in einem organischen Lösungsmittel, z. B. Chloroform, von dem Inner-Endosperm entfernen.

Die obenerwähnte Separierung der Innerendospermzellverbände von den wasserunlöslichen Samenteilchen beruht auf dem unterschiedlichen spezifischen Gewicht der verschiedenen Zellarten. Der Keimling der Guarsaat hat eine Dichte von etwa 1290-1350 kg/m$^3$, während die Schale und der grösste Teil des Endosperms (inkl. aleuronähnlicher Zellschicht) eine Dichte von ca. 1490 -1510 kg/m$^3$ aufweisen (bei einem Wassergehalt von etwa 10 %). Die Dichte der die aleuronähnliche Zellschicht enthaltenden Fraktion variiert zwischen 1300 und 1450 kg/m$^3$.

Die Dichte des Chloroforms ist 1470 kg/m$^3$ bei 200°C und liegt somit zwischen diesen Fraktionen. Dies hat zur Folge, dass die leichteren proteinreichen Bestandteile aufschwimmen und sich das proteinarme Innerendospermmehl absetzt.

Die Trennung in Schichten verschiedener Dichte erfolgt als Funktion der Zeit. Durch einfache Versuche lassen sich die optimalen Zeitbedingungen und Lösungsmittel für das jeweilige Ausgangsmaterial und die jeweiligen Erfordernisse ermitteln.

Die Trennung erfolgt nach dem Stokes'schen Gesetz, das lautet:

$$v = \frac{1}{18\eta_k} \cdot x^2 \cdot g \cdot (\rho - \rho_d), \text{ bzw.}$$

$$x = \left[\frac{18\, \eta_k \cdot v}{g \cdot (\rho_k - \rho_d)}\right]^{\frac{1}{2}}$$

v = Aufrahm- oder Absetzgeschwindigkeit in m/s
$\eta_k$ = dynamische Viskosität der kontinuierlichen Phase (das Lösungsmittel) in Pa.s.
g = Erdbeschleunigung in m/s$^2$
$\rho_k$ = Dichte der kontinuierlichen Phase in kg/m$^3$
$\rho_d$ = Dichte der dispersen Phase (der Feststoff) in kg/m$^3$

Je nach Beschaffenheit des Ausgangsmaterials entsteht eine mehr oder weniger klare Zwischenschicht, aus welcher gegebenenfalls weitere Feststoffe gewonnen werden können.

Durch die Wahl der Dichte-Differenz zwischen der kontinuierlichen Phase und der dispersen Phasen lassen sich die Separierungsgeschwindigkeit der verschiedenen Fraktionen und ihre Mengen beeinflussen.

Folgende Lösungsmittel bzw. -gemische, die bei 20°C eine Dichte von 1460 - 1480 kg/m$^3$ aufweisen, können zum Beispiel zur Separierung von Guarmehlen eingesetzt werden.
a) Trichlorethen, Dichte = 1480 kg/m$^3$
b) Gemisch aus 87 Vol.-% Trichlortrifluorethan und 13 Vol.-% 2-Propanol, Dichte = 1477 kg/m$^3$
c) Gemisch aus 51 Vol.-% Tetrachlorethen und 49 Vol % Trichlorethan, Dichte = 1460 kg/m$^3$.

Weiterhin sind z. B. geeignete Mischungen von zwei oder mehr der folgenden Lösungsmittel zur Separierung verwendbar:

| Lösungsmittel | Dichte kg/m$^3$ |
|---|---|
| Tetrachlormethan | 1595 |
| Trichlorethen | 1466 |
| Dichlormethan | 1320 |
| Trichlorpropan | 1390 |
| Trichlorethan | 1325 |
| Toluol | 866 |
| Tetrachlordifluorethan | 1634 |
| Schwerbenzin | 760 -785 |

Diese Aufzählung ist nur als Beispiel gedacht, und der Fachmann kann leicht zahlreiche weitere passende Lösungsmittelgemische zusammenstellen, welche die gewünschte Dichte aufweisen.

Zur Ausführung des erfindungsgemässen Verfahrens wird im allgemeinen Gewichtsteil Ausgangsprodukt in 1.4 - 4.0 Gewichtsteilen Lösungsmittel unter Rühren suspendiert und bis zur Trennung stehengelassen. Anschliessend wird die obere Schicht entfernt, der Rest nochmals aufgerührt und wiederum stehengelassen. Nach der zweiten Trennung wird die obere Schicht entfernt. Die abgesetzte untere Schicht wird aufgerührt und abgelassen, durch Zentrifugieren vom Lösungsmittel getrennt und getrocknet.

Dichteseparierungen handelsüblicher Guarkernmehle unterschiedlicher Qualität ergaben die folgenden Fraktionsmengen (Gew.-%):

| Produktname | Inner-Endospermmehl | Obere Schicht | Verlust |
|---|---|---|---|
| Guar CSA-200/50 (Meyhall) | 75 | 24 | 1 |
| Guar CSAA M 225 (Meyhall) | 61 | 36 | 3 |
| Guar CSAA M 100 (Meyhall) | 70 | 27 | 3 |

Eine 1 %-ige Lösung des derart erhaltenen Innerendospermmehls hat eine Viskosität von 7'000 - 8'000 mPa.s. Guar-Produkte mit einer so hohen Viskosität waren bisher im Handel nicht erhältlich.

Mit der aleuronähnlichen obere Schicht sind noch Zellen verbunden, die wasserlösliche Galaktomannane enthalten, und daher weist auch die aufschwimmende Fraktion in 1 %-iger Lösung Viskositäten von 2'000-3'000 mPa.s auf. Diese Fraktion kann als Ausgangsprodukt für Verdickungsmittel für die Papier- und Textilindustrie verwendet werden.

Durch die Dichteseparierung mit für Lebensmittel zugelassenen Lösungsmittelgemischen oder durch vollständige Entfernung des verwendeten Lösungsmittels aus der abgetrennten Fraktion erhält man Verdickungsmittel für die Lebensmittelindustrie, die Lösungen mit bis zu 20 % höheren Viskositäten ergeben, was bisher noch nie erreicht werden konnte. Dies erlaubt eine Reduktion der Einsatzmenge.

Die nach dem erfindungsgemässen Verfahren erhaltenen unmodifizierten Innerendospermmehle eignen sich vorzüglich als kostengünstige Verdickungsmittel für die Textilindustrie (Teppichdruck Space-dyeing), da ihre Lösungen klarer sind, also weniger ungelöste Anteile enthalten, und ausserdem bei gleicher Konzentration eine höhere Viskosität haben als handelsübliche Guarprodukte, was es erlaubt, Verdickungsmittel einzusparen. Verdickungsmittel dieser Art weisen in 1 %-iger Lösung, bei 25°C und 20 rpm in einem Brookfield Viskosimeter RVT gemessen, eine Viskosität auf, die mindestens 20 % höher liegt als diejenige einer entsprechenden Lösung der Ausgangsprodukte.

Die Innerendospermfraktion lässt sich leichter depolymerisieren als die üblichen nicht fraktionierten Guarkernmehle, z. B. durch alkalische Oxidation und andere Depolymerisierungsreaktionen (enzymatisch, thermisch, Säureabbau).

Kationische Derivate der Innerendospermfraktion ergeben praktisch wasserklare Lösungen mit Viskositäten bis zu 4'000 mPa.s in 1 %-iger Konzentration. Entsprechende hydroxypropylierte bzw. karboxymethylierte Guarderivate ergeben gleichfalls Lösungen von hoher Viskosität und Klarheit.

Auch Phosphatester der Innerendospermfraktion zeigen verbesserte Eigenschaften bezüglich Farbe und Klarheit der Lösungen im Vergleich zu den handelsüblichen Phosphatestern von Guarkernmehl.

Die Erfindung wird im folgenden anhand von einigen Beispielen näher erläutert. Die Beispiele beziehen sich auf die chargenweise Herstellung von Guarprodukten, doch können auch sämtliche anderen Mehle auf entsprechende Weise aufgetrennt und modifiziert werden. Die Verfahren können auch kontinuierlich, im Kreislauf, durchgeführt werden.

Die Prozentangaben sind immer in Gewichtsprozenten sofern nicht anders vermerkt. Die Viskosität bezieht sich immer auf 1 Gew.-% Lösungen bei 250°C, gemessen mit einem Brookfield Viskosimeter RVT bei 20 rpm.

**Beispiel 1**

In 20 l Trichlorethen werden unter Rühren 7.5 kg Guar Kernmehl, Typ CSA- 200/50 (Meyhall) dispergiert und mindestens 30 Minuten stehengelassen.

Tabelle 1 fasst die Ergebnisse von vier Parallelversuchen zusammen, die bei der Dichteseparierung von Guar Gum CSA-200/50 (Meyhall) in Trichlorethen erzielt wurden. Das Guarendospermmehl wurde in die Fraktionen Innerendosperm und obere Schicht (aleuronähnliche Zellschicht) zerlegt. Die Dichte der Innerendospermfraktion betrug 1484 - 1507 kg/m³ bei 24°C, derjenige der oberen Fraktion etwa 1300 - 1450 kg/m³. Die Ergebnisse zeigen die Reproduzierbarkeit des Verfahrens.

Die aufgeschwommenen, proteinreichen Teilchen wurden nach 30 Minuten abgetrennt und unter Vakuum filtriert.

Das Innerendospermmehl wurde ebenfalls nach dieser Methode zurückgewonnen. Es haften etwa 25 Gew.-% Lösungsmittel an dem Produkt, die durch Trocknen in 60 - 70°C heisser Luft entfernt werden. Das verdampfte Trichlorethen kann durch geeignete Massnahmen zurückgewonnen werden.

In den Tabellen 2 und 3 sind die Analysedaten von Separierungen in Innerendosperm- und obere Schicht, im Vergleich zum Ausgangsmehl (Tabelle 1), zusammengestellt.

**Tabelle 1**

| | | Versuch No. | | | |
|---|---|---|---|---|---|
| | | 1 | 2 | 3 | 4 |
| Guar Kernmehl | kg | 4,625 | 7,583 | 7,583 | 7,583 |
| Trichlorethen | lt | 12 | 20 | 20 | 20 |
| Innerendosperm | kg | 3,510 | 5,682 | 5,668 | 5,600 |
| Obere Schicht | kg | 1,072 | 1,755 | 1,903 | 1,928 |
| Lösungsmittel im Produkt vor Trocknung | lt | 1,7 | 1,8 | 1,8 | 1,8 |
| Verlust Produkt | % | 1 | 2 | 0 | 1 |

**Tabelle 2**

|  | | Innerendosperm der Versuche | | | |
|  | Ausgangsmehl | 1 | 2 | 3 | 4 |
|---|---|---|---|---|---|
| Viskosität, 20 rpm, 25°C | | | | | |
| nach 1 Std. | 5'500 | 6'750 | 6'850 | 6'850 | 6'900 |
| nach 24 Std. | 5'800 | 6'900 | 7'000 | 7'000 | 7'000 |
| heissgelöst | | 6'940 | 7'320 | 7'210 | 6'950 |
| pH 1 % | | 6,6 | 6,6 | 6,7 | 6,7 |
| Wassergehalt | 9,0 | 7,4 | 8,0 | 7,8 | 5,6 |
| Proteingehalt | 3,8 | 1,9 | 1,6 | 1,6 | 1,6 |
| AIR-Gehalt | 2,2 | 1,5 | 1,4 | 1,2 | 1,3 |

**Tabelle 3**

|  | | Obere Schicht der Versuche | | | |
|  | Ausgangsmehl | 1 | 2 | 3 | 4 |
|---|---|---|---|---|---|
| Viskosität, 20 rpm, 250°C | | | | | |
| nach 1 Std. | 5'500 | 2'420 | 2'020 | 2'020 | 2'340 |
| nach 24 Std. | 5'800 | 2'450 | 2'070 | 2'160 | 2'380 |
| pH 1 % | | 6,8 | 6,9 | 7,0 | 6,9 |
| Wassergehalt | 9,0 | 7,0 | 7,4 | 6,8 | 7,2 |
| Proteingehalt | 3,8 | 9,4 | 10,4 | 10,8 | 9,7 |
| AIR-Gehalt | 2,2 | 3,4 | 3,6 | 3,4 | 3,2 |

(acid insoluble residue = säureunlösliche Bestandteile)

**Beispiel 2**

600 g Guarkernmehl CSA-200/50 (Meyhall) wurden in 2336 g Trichlorethen suspendiert.

Zur Untersuchung des Einflusses der Zeit auf die Qualität der Trennung wurden nach 25, 30, 35 und 150 Minuten die abgesetzten Fraktionen durch Filtration und durch Trocknung bei 50 - 60°C zurückgewonnen.

Uie Fraktionen wurden mikroskopisch und durch die Viskositaten ihrer 1 %-igen Lösungen (berechnet auf 10 Gew.-% Wasser) charakterisiert. Die Lösungen wurden bei 86 - 89°C während 10 Minuten gelöst, und die Viskosität wurde bei 25°C gemessen. Die untenstehende Tabelle zeigt die Ergebnisse:

| Fraktion | Absetzzeit in Minuten | Absetzmenge in g, 10 % Wassergehalt | Viskosität mPa.s | Mikroskopischer Befund |
|---|---|---|---|---|
| 1 | 25 | 179.1 | 7'900 | Reines Innerendosperm |
| 2 | 30 | 132.8 | 7'650 | Reines Innerendosperm |
| 3 | 35 | 122.1 | 6'800 | Vereinzelte aleuronähnliche Zellverbände |
| 4 | 150 | 25.2 | 4'400 | Wie Fraktion 3 plus vereinzelte Schalenreste |
| | | --- | | |
| | | 459.2 | | |

Durch gezielte Wahl der Absetzzeit ist also eine einwandfreie Trennung in Fraktionen möglich, die wässrigen Lösungen mit in Abhängigkeit von der Trennungszeit unterschiedlichen Viskositäten ergeben.

Aus der Tabelle ist ersichtlich, dass die erzielbare Viskosität mit zunehmender Absetzzeit fällt.

**Beispiel 3**

7.5 kg Guar-Kernmehl CSA-200/50 (Meyhall) mit einem Wassergehalt von 9 % werden unter starkem Rühren in einem Gemisch aus 17.4 l Trichlortrifluorethan (Freon R 113) und 2.6 l 2-Propanol, mit einer Dichte von 1477

5

kg/m³, suspendiert.

Bei diesem Versuch wurden folgende Fraktionen erhalten:

| Fraktion No. | Charakterisierung | Gewicht (10 % Wasser) Visk. 1 % |
|---|---|---|
| 1 | Obere Schicht (proteinreich) | 1,457 kg (nicht bestimmt) |
| 2 | Mittlere Schicht (proteinreich bis proteinarm) | 0,686 kg (nicht bestimmt) |
| 3 | Untere Schicht (proteinarm) | 5,401 kg 7'600 mPa.s |

**Beispiel 4**

15 kg Guarinnerendospermmehl aus Beispiel 1 (Viskosität ca. 7'600 mPa.s) werden in einer Stickstoffatmosphäre mit 3.32 kg Natriumhydroxyd in Anwesenheit von 16 g Natriumtetraborat .10 aq bei einem Gesamtwasseranteil von etwa 40 % bei 65°C während 60 Minuten umgesetzt.

Nach Kühlung auf 45°C wird das alkalische Produkt partiell mit 2.40 kg 80 % Essigsäure, die vorher mit 0.60 kg Wasser und 1.00 kg 2-Propanol verdünnt wurde, neutralisiert.

Nach einer weiteren Kühlung bis auf Zimmertemperatur werden 3.35 kg Glycidyltrimethylammoniumchlorid zugesetzt, die vorher mit 3.60 kg Wasser verdünnt wurden. Nach Erhitzen bis auf 65°C wird die Reaktion bei dieser Temperatur während einer Stunde fortgesetzt. Anschliessend wird das Reaktionsprodukt auf 45°C gekühlt. Dann werden zur Neutralisation 1.27 kg Essigsäure, verdünnt mit 1.00 kg Methanol, zugesetzt.

Anschliessend können die Nebenprodukte des Reaktionsgemisches mit Methanol extrahiert werden oder es kann direkt getrocknet werden.

Das gereinigte Produkt löst sich rasch bei einem pH von 5.0 in Wasser auf und ergibt eine wasserklare Lösung. Ein solches Produkt ist vorzüglich als Haarkonditionierungsmittel in transparenten Shampoos anzuwenden.

Es lassen sich nach diesem Verfahren Produkte mit einem DS von 0.10 bis 0.14 herstellen, die als 1 %-ige Lösungen Viskositäten bis zu 4'000 mPa.s aufweisen.

**Beispiel 5**

100 g Guarinnerendospermmehl aus Beispiel 1 werden mit Natriummonochloracetat und Natriumhydroxyd auf übliche Weise carboxymethyliert. Nach der Reaktion wird das Produkt getrocknet und anschliessend gemahlen.

Ein Karboxymethylguar mit einem DS von 1.6 bis 1.8 nach diesem Beispiel ergibt klare wässrige Lösungen und zeigt bei 8 % Konzentration eine Viskosität von 24.000 mPa.s (gemessen mit einem Brookfield RVT-Viskosimeter bei 20 RPM, Spindel 6, 25°C).

Das Produkt ist leicht, d.h. ohne Klumpen, dispergierbar und löst sich bei einem pH unter 10 augenblicklich auf.

**Beispiel 6**

1.06 Mol Guarinnerendospermmehl aus Beispiel 1 werden mit 0.21 Mol Natriummonochlorazetat und 0.50 Mol Natriumhydroxyd bei einem Wassergehalt des Reaktionsgemisches von 40.5 % bei 65°C unter Stickstoff karboxymethyliert. Dann wird das alkalische Reaktionsprodukt partiell mit 0.15 Mol Phosphorsäure, verdünnt mit 0.5 Mol Methanol, neutralisiert und das Produkt wird bei 80°C getrocknet und anschliessend gemahlen.

Das erhaltene Produkt weist in einer 1 %-igen Lösung eine Viskosität von 3'000 mPa.s auf, bei einem pH-Wert von 9,4. Der Substitutionsgrad beträgt etwa 0,16.

6

**Beispiel 7**

200 g Guarinnerendospermmehl erhalten nach Beispiel 1 werden in einem Laborkneter mit einer Lösung von 10 ml NaOH 30 %, verdünnt mit 100 ml Wasser, gemischt, die innerhalb von sieben Minuten tropfenweise bei Zimmertemperatur zugegeben wurde. Nach Beendigung des Eintropfens wird noch 3 Minuten weitergemischt, um eine gute Durchmischung zu gewährleisten. Anschliessend wird eine Lösung von 6 ml 30 % Wasserstoffperoxid und 20 ml Wasser innerhalb von 4 Minuten langsam zugefügt und während des Aufheizens bis auf 70°C gut mit dem alkalischen Guarinnerendospermmehl vermischt. Während des Aufheizens und auch während der Depolymerisation bei 70°C bleibt der Kneter verschlossen. Die Depolymerisation dauert in der Regel 60 Minuten. Nach dieser Zeit ist das Wasserstoffperoxid verschwunden, und das Reaktionsgemisch kann nach Kühlung bis auf 50°C mit 5 ml 85 % $H_3PO_4$, verdünnt mit 20 ml Isopropanol, neutralisiert werden.

Das Produkt wird anschliessend bei 80°C bis auf einen Wassergehalt von ca. 10 % getrocknet und dann gemahlen.

Das nach dieser Vorschrift erhaltene, fast weisse Produkt löst sich rasch in kaltem Wasser.

Die Viskosität einer 4 %-igen Lösung beträgt ca. 4'500 mPa.s (gemessen mit Brookfield RVT, Spindel 4, 20 RPM, 25°C).

Das Produkt eignet sich vorzüglich als Textildruckverdickungsmittel. Beim Druck auf Polyester ergibt eine 3 % des Produktes enthaltende Druckpaste dieselben Resultate wie ein übliches Guarprodukt in einer Konzentration von 5-6 %.

Das Produkt ist ferner thermisch äusserst stabil. Wird das lufttrockene Produkt während drei Tagen einer Hitzebehandlung bei 60°C ausgesetzt, so verliert es nur 18 % seiner Verdickungskraft, während handelsübliche Produkte bei dieser Behandlung bis zu 60 % einbüssen können.

**Beispiel 8**

200 g Guarinnerendospermmehl (Viskosität ca. 7'000 mPa.s) werden mit einer Lösung von 60 ml 30 % NaOH, 36 ml 85 % $H_3PO_4$ und 100 ml Wasser während 10 Minuten innig vermischt. Die Phosphatlösung (gekühlt bis auf 25°C) wurde während 13 Minuten zugetropft. Anschliessend wird wie in Schweiz-Patent 642.669 beschrieben verfahren.

Das nach diesem Beispiel erhaltene schwach alkalische, leicht crèmefarbige und dispergierfähige Produkt löst sich bei neutralem pH rasch in kaltem Wasser.

Die Viskosität einer 2 %-igen Lösung beträgt ca. 100 mPa.s.

**Beispiel 9**

2500 g Guarinnerendospermmehl aus Beispiel 1 werden tropfenweise mit einer Lösung von 265 ml 30 % NaOH, 2.5 g Borax und 1300 ml Wasser in einem Reaktor behandelt versetzt.

Nach beendeter Zugabe der Lösung wurde der Reaktor verschlossen und die Luft durch Stickstoff verdrängt.

Die Reaktionstemperatur wurde durch indirektes Heizen auf 70 - 75°C eingestellt, und 565 g Propylenoxidgas wurden während einer Stunde eingeleitet. Nach einer Nachreaktion von 10 Minuten wurde das Produkt bei 80°C im Trockenschrank getrocknet und anschliessend gemahlen.

Ein solches Hydroxypropylguarderivat weist in 1 %-iger wässriger Lösung eine Viskosität von etwa 3000 mPa.s, bezogen auf 10 % Wassergehalt des Produktes, auf.

**Beispiel 10**

75 g JBKM FLEUR M 175 (Johannisbrotkernmehl der Firma Meyhall Chemical AG) werden unter Rühren in 294 g Trichlorethen suspendiert.

Nach 30 Minuten werden die abgesetzte und die aufschwimmende Fraktion getrennt und durch Filtration und anschliessende Trocknung bei 70°C gewonnen.

Die Gewichte der beiden Fraktionen und ihr Proteingehalt (6.25 x N-Gehalt) illustrieren eindeutig die Trennung durch das Verfahren.

| Fraktion | Gewicht (g) | Protein (%) |
|---|---|---|
| Rohprodukt | 75.00 | 6.3 |
| Obere Schicht | 2.85 | 41.7 |
| Untere Schicht | 71.45 | 4.9 |

**Beispiel 11**

Werden 500 g Raw Guar Meal (Guar-Keimlingsmehl plus Schale plus Endospermfragmente) in 1'000 ml Trichlorethen und 70 ml Kristallöl (Schwerbenzin), Dichte des Gemisches 1420 kg/m³, suspendiert, so ergeben sich nach einer Separationszeit von 5 Minuten folgende Fraktionen:

| Fraktion | in Gew.-% | | | | |
|---|---|---|---|---|---|
| | A I R | Fett | $H_2O$ | Protein | Asche |
| ca. 50 % Obere Schicht | 11.4 | n.g. | 5.7 | 57.7 | 4.8 |
| 13 - 15 % Mittlere Schicht | 8.8 | 1.0 | 5.6 | 57.8 | 5.9 |
| ca. 30 % Untere Schicht | 37.6 | 1.0 | 3.5 | 11.6 | 4.4 |
| Raw Guar Meal | 22.3 | 4.3 | 8.5 | 40.1 | 5.0 |

**Beispiel 12**

Werden 1'000 g Tamarindenkernmehl in 2'000 ml Trichlorethen bei 52°C extrahiert (zur Entfettung) und anschliessend als Suspension während 21 Stunden bei 20°C stehengelassen, so bilden sich drei Schichten:

| Fraktion | Gewicht (g) | Protein % | $H_2O$ % |
|---|---|---|---|
| Obere Schicht | 92 | 68.7 | 7.4 |
| Mittlere Schicht | 55 | n.g. | n.g. |
| Untere Schicht | 713 | 11.0 | 6.5 |
| Ausgangsmehl | 1'000 | 12.9 | 7.5 |

Die obere Schicht enthält Aleuronkörner mit eineni Durchmesser von etwa 4 μm und Aleuronanhäufungen mit einem Durchmesser von etwa 30 μm.
n.g: nicht gemessen

**Beispiel 13**

Die Klarheit der wässrigen Lösungen verschiedener nach dem beschriebenen Verfahren erhaltenen Produkte wurde durch Lichttransmission bei 500 nm mit einer Kuvette von 1 cm Lichtweg gemessen. Die Konzentration der Lösungen betrug 0.5 Gew.-%, ohne Berücksichtigung des Wassergehaltes. Die angegebene Transmission in % ist ein Mittelwert von drei Bestimmungen. Die Klarheit der Lösungen von Guarinnerendospermderivaten, die aus den vorstehenden Beispielen erhalten wurden, ist, wie aus der folgenden Tabelle zu ersehen, bedeutend besser als die der Lösungen der handelsüblichen Guarderivate.

| Produkt Name | Ausgangsmehl | Viskosität 20 rpm, 25°C, mPa.s | Transmission %, 500 nm | Beispiel Nr. |
|---|---|---|---|---|
| MEYPRO-GUAR CSA-200/50 | - | 760 | 45.8 | 1 |
| - Innerendosperm | CSA-200/50 | 910 | 60.9 | 1 |
| - Innerendosperm | CSA-200/50 | 920 | 59.9 | 1 |
| - Innerendosperm | CSA-200/50 | 900 | 58.3 | 4 |
| - Peripherieschicht | CSA-200/50 | 180 | 18.2 | 1 |
| CATIONIC GUAR | CSA-200/50 | 250 | 65 - 70 | |
| (Cationic Guar HV) | Innerendosperm von | 380 | 91.7 | 4 |
| (Cationic Guar LV) | CSA-200/50 | 85 | 92.1 | 4 |
| CM-GUAR (Karboxymethyl-Guar) | Innerendosperm von CSA-200/50 | 15 | 97.8 | 5 |
| HP-GUAR (Hydroxypropyl-Guar) | CSA-200/50 | 350 | 65.3 | - |
| | Innerendosperm von | 320(1) | 79.0 | |
| | CSA-200/50 | 480(2) | 75.0 | 9 |
| | | 300(3) | 77.0 | |
| Wasser | | | 100.0% | |

HP-Guar
(1) = Rohether eines Versuches der ähnlich wie in Beispiel 9 erhalten wurde.
(2) = gereinigtes Produkt
(3) = Rohether von Beispiel 9

## Patentansprüche

1. Verfahren zur Herstellung eines galaktomannanreichen Verdickungsmittels, welches in wässeriger Lösung eine höhere Viskosität aufweist als das Ausgangsprodukt, dadurch gekennzeichnet, dass man ein Leguminosen-Endospermmehl in eine polysaccharidreiche, proteinarme Fraktion und eine polysaccharidarme, proteinreiche Fraktion aufteilt, indem man das Mehl in einem Lösungsmittel oder Lösungsmittelgemisch suspendiert, dessen Dichte zwischen den Dichten der beiden Fraktionen liegt, die fraktionen trennt, die polysaccharidreiche Fraktion vom Lösungsmittel bzw. -gemisch befreit und die darin enthaltenen Galaktomannane gegebenenfalls auf bekannte Weise veräthert, verestert oder depolymerisiert.

2. Verfahren nach Patentanspruch 1, dadurch gekennzeichnet, dass das Ausgangsprodukt Johannisbrotkernmehl, Guarkernmehl, Tamarindenkernmehl, Tarakernmehl oder insbesondere Guarkernmehl ist.

3. Verfahren nach Patentanspruch 2, dadurch gekennzeichnet, dass ein Lösungsmittel oder Lösungsmittelgemisch mit einer Dichte von 1460 bis 1480 kg/m³ verwendet wird, vorzugsweise in einer Menge von 1,4 bis 4,0 Teilen pro 1 Teil Ausgangsmehl.

4. Galaktomannanreiches Verdickungsmittel, hergestellt nach einem der Patentansprüche 1 bis 3.

5. Verdickungsmittel nach Patentanspruch 4, dadurch gekennzeichnet, dass es aus Guarkernmehl hergestellt ist und in 1 %-iger Lösung bei 25°C und 20 RPM im Brookfield Viskosimeter RVT eine Viskosität aufweist, die mindestens 20 % höher liegt als diejenige einer entsprechenden Lösung der Ausgangsprodukte.

## Claims

1. A process for the preparation of a galactomannan-rich thickener, which thickener has in an aqueous solution a higher viscosity than the starting material, characterized in that an endosperm flour from legumes is separated into a polysaccharide-rich protein-poor fraction and a polysaccharide-poor protein-rich fraction by suspending the particles in a solvent or solvent mixture whose density is between those of the fractions to be separated, separating the fractions formed, and removing the solvent or solvent mixture from the polysaccharide-rich fraction and optionally etherifying, esterifying or depolymerizing the galactomannanes in said fraction by known methods.

2. A process according to claim 1 in which the starting material is carob bean flour, guar flour, tamarind flour, tara-gum or especially guar flour.

3. A process according to claim 2 in which the solvent or solvent mixture used has a density of 1460 to 1480 kg/m$^3$ which is preferably used in an amount of 1,4 to 4,9 parts by weight per part of starting flour.

4. A galactomannan-rich tickener according to any one of claims 1 to 3.

5. A thickener according to claim 4, characterized in that it is prepared from guar flour and has, in 1 % strength solution, a viscosity, in a Brookfield RVT VISCOMETER at 25°C and 20 rpm, which is at least 20 % higher than that of a corresponding solution of the starting products.

**Revendications**

1. Procédé de préparation d'un agent épaississant riche en galactomannane, qui, en solution aqueuse, a une viscosité plus élevée que celle du produit de départ, caractérisé en ce qu'on divise une farine d'endosperme de légumineuses en une fraction pauvre en protéine et riche en polysaccharide et en une fraction riche en protéine et pauvre en polysaccharide et ce, en mettant la farine en suspension dans un solvant ou dans un mélange de solvants dont la densité se situe entre les densités des deux fractions, en séparant les fractions, en libérant la fraction riche en polysaccharide du solvant ou du mélange de solvants et en éthérifiant, estérifiant ou dépolymérisant le cas échéant à la manière habituelle le galactomannane contenu dans cette fraction.

2. Procédé selon la revendication 1, caractérisé en ce que le produit de départ est la farine de caroube, la farine de guar, la farine de tamarin, la farine de tara ou en particulier la farine de guar.

3. Procédé selon la revendication 2, caractérisé en ce qu'un solvant ou un mélange de solvants d'une densité de 1460 à 1480 kg/m$^3$ est utilisé, de préférence en une quantité de 1,4 à 4,0 parties pour une partie de farine de départ.

4. Agent épaississant riche en galactomannane, préparé selon l'une quelconque des revendications 1 à 3.

5. Agent épaississant selon la revendication 4, caractérisé en ce qu'il est préparé à partir de farine de guar et a, en solution à 1 %, à 25°C et 20 t/m, dans un viscosimètre Brookfield RVT, une viscosité d'au moins 20 % plus élevée que celle d'une solution analogue des produits de départ.